# EUROPEAN PATENT APPLICATION

(11) **EP 4 632 696 A1**
(43) Date of publication of application: **15.10.2025**
(21) Application number: 25166366.2
(22) Date of filing: 26.03.2025
(51) Int. Cl.: G06V 20/64, G01B 11/30, G01B 21/30

(54) **SYSTEMS AND METHODS FOR SURFACE FINISHING**

(30) Priority: 10.04.2024 US 202463632096 P; 29.07.2024 US 202418786871
(71) Applicant: The Boeing Company, Arlington, VA 22202 (US)
(72) Inventor: RENNISON, Benjamin, Arlington, 22202 (US)
(74) Representative: Boult Wade Tennant LLP

(57) **Abstract**

A system for automated sanding of a surface of a component includes a model generator, a model analyzer, and a path planner. The model generator is configured to generate a model representing at least a portion of a surface of a component. The model analyzer is configured to analyze the model to determine waviness of the surface. The path planner is configured to generate a sanding plan.

## Description

### PRIORITY

This application claims priority from U.S. Ser. No. 63/632,096 filed on April 10, 2024.

### FIELD

The present disclosure relates generally to surface finishing operations and, more particularly, to systems and methods for automated sanding and sanding path planning.

### BACKGROUND

Surface finishing, such as sanding, grinding, and polishing, can be an important process for improving the surface quality of manufactured parts. Surface finishing operations are performed manually or are automated using industrial robot automation technology. Regardless, it is challenging to properly determine the waviness of the surface to be finished, which can result in over finishing. Accordingly, those skilled in the art continue with research and development efforts in surface finishing operations.

### SUMMARY

Examples of a system for automated sanding, a method for automated sanding, and a computer-program product, are provided. The following is a non-exhaustive list of examples, which may or may not be claimed, of the subject matter according to the present disclosure.

In an example, the system includes a model generator configured to generate a model representing at least a portion of a surface of a component. The system includes a model analyzer configured to analyze the model to determine waviness of the surface. The system includes a path planner configured to generate a sanding plan.

In another example, the method includes steps of: (1) generating a model of a component; (2) analyzing the model to determine waviness of a surface of the component; and (3) generating a sanding plan for use by a robotic sander.

In another example, the computer program product includes a non-transitory computer-readable medium having program code that, when executed by one or more processors, causes the one or more processors to perform operations of: (1) generating a model of a component from measurement data; (2) analyzing the model to determine dimensions of waviness of a surface of the component; and (3) generating a sanding plan for use by a robotic sander to remove the waviness.

Other examples of the system, the method, and the computer program product will become apparent from the following detailed description, the accompanying drawings, and the appended claims.

### BRIEF DESCRIPTION OF THE DRAWINGS

Fig. 1 is a schematic block diagram of an example of a manufacturing environment;
Fig. 2 is a schematic block diagram of an example of an analysis environment;
Fig. 3 is a flow diagram of an example of a method for automated surface finishing;
Fig. 4 is a schematic illustration of an example of a portion of a component and a measurement system;
Fig. 5 is a graphical illustration of an example of a model representing a portion of the component;
Fig. 6 is a graphical illustration of an example of a portion of a model representing a component and a nominal model representing the component;
Fig. 7 is a graphical illustration of an example of a portion of a modified model representing the component and the nominal model representing the component;
Fig. 8 is a graphical illustration of an example of an overall deviation between the model of the component and a nominal model of the component in an XYZ-coordinate system;
Fig. 9 is a graphical illustration of an example of the overall deviation between the model and the nominal model in an UVW-coordinate system;
Fig. 10 is a graphical illustration of an example of a form deviation between the model and the nominal model in the UVW-coordinate system;
Fig. 11 is a graphical illustration of an example of a waviness deviation between the model and the nominal model in the UVW-coordinate system;
Fig. 12 is a graphical illustration of an example of the waviness deviation between the model and the nominal model in the XYZ-coordinate system;
Fig. 13 is a graphical illustration of an example of a sanding plan in the XYZ-coordinate system;
Fig. 14 is a schematic illustration of an example of a portion of the component and a robotic sander;
Fig. 15 is a block diagram of an example of a data processing system;
Fig. 16 is a flow diagram of an example of an aircraft manufacturing method; and
Fig. 17 is a schematic block diagram of an example of an aircraft.

### DETAILED DESCRIPTION

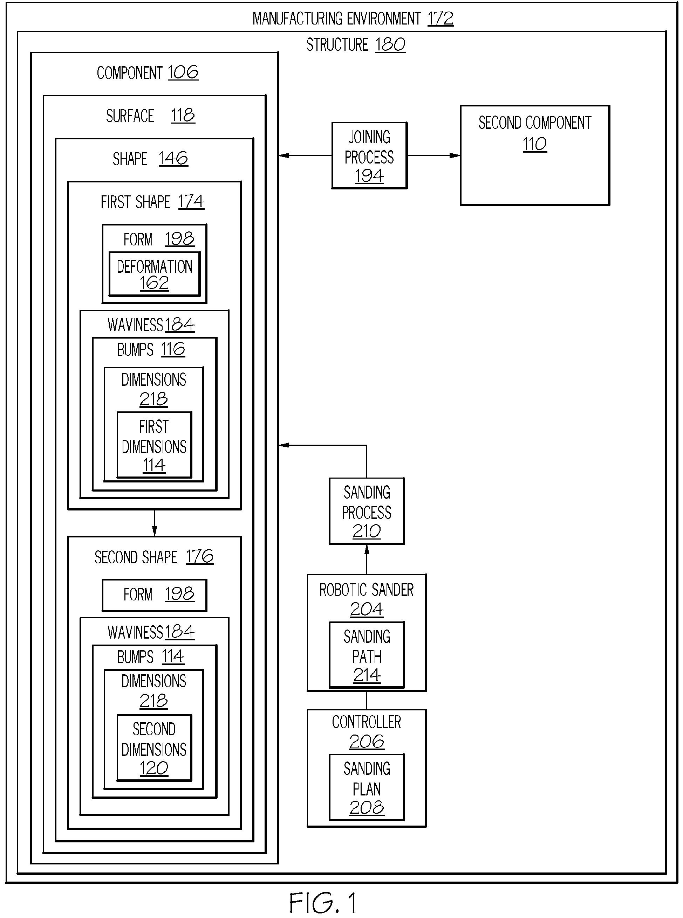

Referring generally to Figs. 1-15, by way of examples, the present disclosure is directed to a system 100 and a method 1000 for automated surface finishing, such as sanding using automated robotic sanders. More particularly, examples of the system 100 and the method 1000 enable improvements in predictive assembly methodologies by which overall deformation of a component is removed such that surface waviness of the component can be determined and the surface can be sanded according to a planned automated sanding plan. In one or more examples, overall deformation of a component is filtered out of three-dimensional (3D) measurement data representing the component, thereby enabling the 3D measurement data to be used to determine dimensions of gradual shape undulates (e.g., waviness) of the component's surface.

In various examples, the system 100 and method 1000 utilize a measurement sensor that collects measurement data representing at least a portion of a surface of a manufactured component or other structure. In various examples, the system 100 and method 1000 utilize a process engine that processes a point cloud generated using the measurement data provided by the sensor. In various examples, the process engine applies a proactive filter to the point cloud such that the measurement data is processed to generate a waviness plot representing a deviation based upon a sanding surface contour requirement. In various examples, the output waviness point cloud is used to generate a sanding plan for an automated robotic sander.

The present disclosure recognizes that measurement data representing a surface can be collected for sanding operations. However, a true representation of the waviness of the surface cannot be determined. A series of localized fits are generally required to allow the reference geometry to locate the measured data representing the waviness. However, this is not possible for a Gaussian fit, as a "bump on a bump" scenario can lead to inaccurate results and, thus, improper sanding.

Examples of the system 100 and method 1000 enable automated robotic scanning to generate the measurement data. The measurement data is processed to find the actual "bumps" on the surface and to generate a sanding path plan for an automated robotic sander to follow for removal of the bumps in a reductive process.

Examples of the system 100 and method 1000 enable measurement data to be sent to a process engine that fits the data to find a robust areal waviness of the surface. The data can be fit to a nominal model or ideal shape of the component.

Examples of the system 100 and method 1000 enable local deviation to be determined without including a global contour deviation that occurs when a structure is unassembled or otherwise does not have a shape that is the same or substantially the same as the nominal (e.g., ideal) shape of the component.

Examples of the system 100 and method 1000 utilize data filtering, such as a robust Gaussian areal regression filter, on 3D measurement data representing the component to robustly filter out the global or overall deformation of the structure, while preserving the waviness (e.g., peaks and valleys) of the surface relevant to surface finishing, such as sanding.

Examples of the system 100 and method 1000 utilize the shape representing the waviness to produce a sanding plan for surface finishing. The sanding plan removes the local variations in waviness from the surface of the component using an automated robotic sander.

For the purpose of the present disclosure, the term "areal waviness" or "waviness" refers to a three-dimensional characteristic that describes a surface's gradual undulating shape and/or the measurement of a more widely spaced component of surface texture, such as irregularities (also referred to herein as bumps) whose spacing is greater than a roughness sampling length.

Fig. 1 illustrates an example of a manufacturing environment 172. The manufacturing environment 172 is an example of an environment in which a component 106 is manufactured and/or is otherwise processed, such as in which a sanding or other surface finishing operation is performed on at least one surface of the component 106.

In one or more examples, the component 106 includes at least one surface (e.g., surface 118). In other examples, the component 106 includes a plurality of surfaces (e.g., surface 118). For the purpose of the present disclosure, a "surface," such as the surface 118, refers to an exterior boundary of the component 106. The surface 118 can be a continuous surface or a discontinuous surface formed of multiple surfaces. The surface 118 can be flat or planar. The surface 118 can be curved or contoured.

The component 106 can take the form of any manufactured part or object. In one or more examples, the component 106 is a component of another structure or assembly (e.g., structure 180). As an example, the component 106 (e.g., a first component) is coupled to a second component 110 to form at least a portion of the structure 180. For example, one or more components (e.g., component 106, second component 110, etc.) of the structure 180 can by coupled together via any suitable implementation of the joining process 194, such as securing, bonding, mounting, welding, fastening, pinning, stitching, stapling, tying, gluing, and the like.

In one or more examples, the component 106 and the second component 110 are made from any suitable material or combination of materials. In one or more examples, the component 106 and the second component 110 are made from the same material. In one or more examples, the component 106 and the second component 110 are made from different materials. For example, without limitation, the component 106 and the second component 110 may be made from metallic materials, composite materials, polymeric materials, combinations thereof, and the like.

In one or more examples, the component 106 and, thus, the surface 118 of the component 106 has a shape 146. For the purpose of the present disclosure, the "shape" of a component or a surface refers to the geometry of the component or the surface, the dimensions of the component or the surface, and/or the morphology of the component or the surface. For example, the shape 146 of the component 106 and/or the surface 118 may be the three-dimensional shape of the component 106 and/or the surface 118.

In one or more examples, the shape 146 includes form 198 and waviness 184. For the purpose of the present disclosure, "form" refers to the gross or global shape of a component or surface and "waviness" refers to local variations or undulations in the shape of a component or surface.

The present disclosure recognizes that in some circumstances, the shape 146 of the component 106 and, thus, the surface 118 may change throughout manufacturing, transport, surface finishing, and/or assembly. As such, the component 106 and, thus, the surface 118 may have a first shape 174 (e.g., the shape 146 before a particular process or operation) and a second shape 176 (e.g., the shape 146 after the particular process or operation).

In one or more examples, the component 106 and, thus, the surface 118 may experience or exhibit some degree of deformation 162 in the shape 146. For the purpose of the present disclosure, "deformation" refers to a temporary variation in the form 198 of the shape 146, such as between processes or operations. In one or more examples, the deformation 162 may be represented in the first shape 174 and not represented in the second shape 176. In one or more examples, the deformation 162 may be represented in the first shape 174 and represented in the second shape 176. In one or more examples, the deformation 162 may be different in the first shape 174 and the second shape 176. In one or more examples, the deformation 162 is removed or substantially removed from the shape 146 of the component 106 after assembly of the structure 180.

In one or more examples, the component 106 is susceptible to experiencing or exhibiting some degree of deformation 162 (e.g., global deformation) after manufacturing and/or during processing, such that the surface 118 also exhibits some degree of deformation 162. For example, the component 106 may be flexible such that the surface 118 is also flexible. As an example, the component 106 may temporarily bend, deform, flex, sag, or otherwise change shape without causing any undesired permanent effects to the component 106 or the surface 118.

The temporary change in shape (e.g., deformation 162) may be due to a number of factors, such as the size, geometry, weight, etc. of the component 106 after it is manufactured, boundary conditions, gravity, and the like. Consequently, in these examples, the shape 146 of the component 106 and, thus, the surface 118 may change throughout the manufacturing process of the structure 180. As an example, the component 106 and, thus, the surface 118 may have the first shape 174 when held for metrology (e.g., surface measurement) and the second shape 176 when held for surface finishing (e.g., sanding). As another example, the component 106 and, thus, the surface 118 may have the first shape 174 before assembly of the structure 180 and the second shape 176 after assembly of the structure 180. In these examples, the first shape 174 and the second shape 176 are different and are a result of deformation 162.

In one or more examples, the waviness 184 of the surface 118 is formed by a number of bumps 116 on the surface 118. For the purpose of the present disclosure, a "bump" refers to an instance of local variation or undulation in the surface. As used herein, a "number of" refers to one or more.

In one or more examples, the bump 116 (e.g., each one of the number of bumps) has a dimension 218. Generally, the dimension of the bump 116 refers to a measurable parameter or shape of the bump 116, such its thickness, length, width, etc. In one or more examples, the dimension represents the deviation of the local variation in the surface 118 from the ideal shape 216 of the surface 118. In one or more examples, bumps 116 have first dimensions 114 before a surface finishing operation (e.g., sanding process 210) and have second dimensions 120 after the surface finishing operation.

In many cases, it is desirable to sand, polish, or otherwise finish the surface 118 of the component 106 before the joining process 194 and assembly of the structure 180. It may also be desirable to sand, polish, or otherwise finish the surface 118 of the component 106 at a location that is different than the location where assembly occurs. Therefore, it is desirable to determine and address (e.g., remove) the waviness 184 of the surface 118 before the component 106 is integrated into the structure 180.

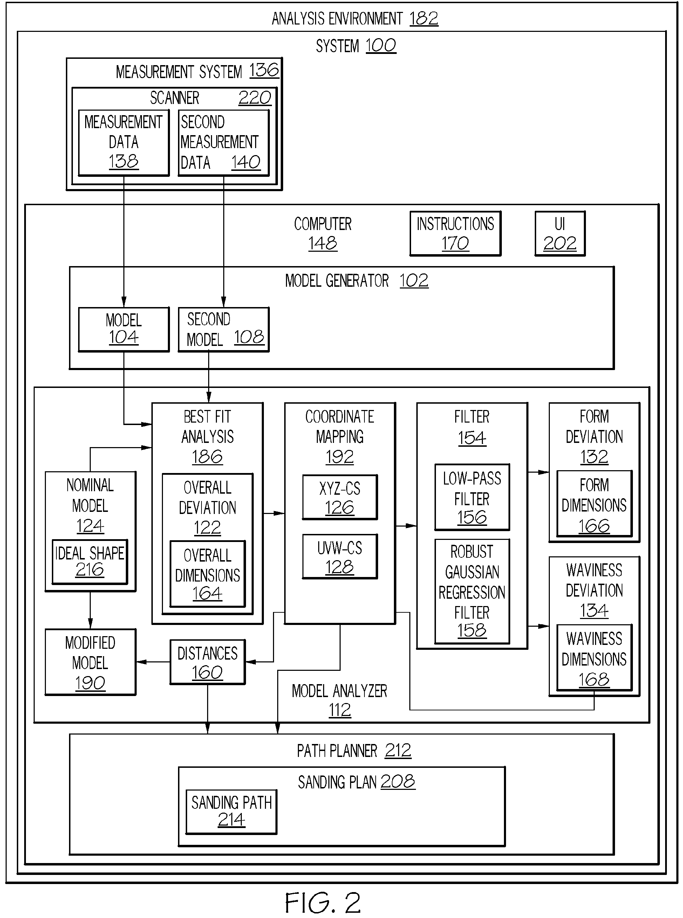

Referring to Figs. 1 and 2, the system 100 (Fig. 2) is used to determine the dimensions 218 of the bumps 116 and other information related to the waviness 184 of the surface 118 and determine a sanding plan 208 for an automated robotic sander 204 for removal of the waviness 184, for example, prior to the joining process 194.

Fig. 2 illustrates an example of an analysis environment 182. The analysis environment 182 is an example of an analysis environment in which the system 100 is implemented to determine the dimensions (e.g., 3D shape information) of the bumps 116 (Fig. 1) on the surface 118. In one or more examples, the analysis environment 182 is remote from or is at a separate location with respect to the manufacturing environment 172. However, in other examples, at least a portion of the system 100 is located or implemented in the manufacturing environment 172 and at least another portion of the system 100 is located or implemented in the analysis environment 182. In yet other examples, an entirety of the system 100 is implemented in the manufacturing environment 172.

Referring to Fig. 2, the following are examples of the system 100. The system 100 includes a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

In one or more examples, the system 100 includes or is implemented using a computer 148. For example, the system 100 is a computer-implemented system. In one or more examples, the computer 148 executes instructions 170 to perform the operations performed by the system 100. In these examples, the computer 148 may include one or more computers, computing devices, or computing systems. When the computer 148 includes more than one computer, the computers may be in communication with each other using any number of wired, wireless, optical, or other types of communications links.

In one or more examples, the system 100 includes a model generator 102. The model generator 102 generates (e.g., is configured or adapted to generate) a model 104 of the component 106 (Fig. 1). In one or more examples, the model 104 represents at least a portion of the component 106. In one or more examples, the model 104 represents at least a portion of the surface 118.

In one or more examples, the model 104 is generated before a sanding or other surface finishing operation (e.g., sanding process 210) is performed on the surface 118 of the component 106 and/or before the component 106 and the second component 110 are coupled together to assemble the structure 180.

In one or more examples, the model 104 represents at least a portion of the surface 118 having the first shape 174. In one or more examples, the first shape 174 of the component 106 is different than the second shape 176. As an example, the first shape 174 is the shape before the sanding process 210 and/or the joining process 194. As an example, the second shape 176 is the shape after the sanding process 210. In one or more examples, the first shape 174 includes the waviness 184 having bumps 116 with first dimensions 114. In one or more examples, the first shape 174 includes the deformation 162 in the shape 146 of the component 106.

In one or more examples, the model generator 102 generates (e.g., is configured or adapted to generate) a second model 108 of the component 106 (Fig. 1). In one or more examples, the second model 108 represents at least a portion of the component 106. In one or more examples, the second model 108 represents at least a portion of the surface 118.

In one or more examples, the second model 108 is generated after a sanding or other surface finishing operation (e.g., sanding process 210) is performed on the surface 118 of the component 106 and/or before the component 106 and the second component 110 are coupled together to assemble the structure 180.

In one or more examples, the second model 108 represents at least a portion of the surface 118 having the second shape 176. In one or more examples, the second shape 176 of the component 106 is different than the first shape 174. In one or more examples, the second shape 176 includes the waviness 184 having bumps 116 with second dimensions 120. In one or more examples, the second shape 176 includes the deformation 162 in the shape 146 of the component 106. In one or more examples, the second shape 176 does not include the deformation 162 in the shape 146 of the component 106.

In one or more examples, the system 100 includes a model analyzer 112. The model analyzer 112 analyzes (e.g., is configured or adapted to analyze) the model 104 to determine the first dimensions 114 of the bumps 116 disposed on the surface 118 of the component 106 before the sanding process 210. The model analyzer 112 analyzes (e.g., is configured or adapted to analyze) the second model 108 to determine the second dimensions 120 of the bumps 116 disposed on the surface 118 of the component 106 after the sanding process 210. The first dimension 114 and the second dimension 120 are examples of the dimensions 218. In one or more examples, the second model 108 is analyzed to check the surface 118 of the component 106 and ensure the waviness 184 is within a suitable (e.g., desirable) threshold.

In one or more examples, the system 100 includes a path planner 212. The path planner 212 generates (e.g., is configured or adapter to generate) the sanding plan 208. The sanding plan 208 is used by a controller 206 during the sanding process 210. The sanding plan 208 includes a sanding path 214 used by the robotic sander 204.

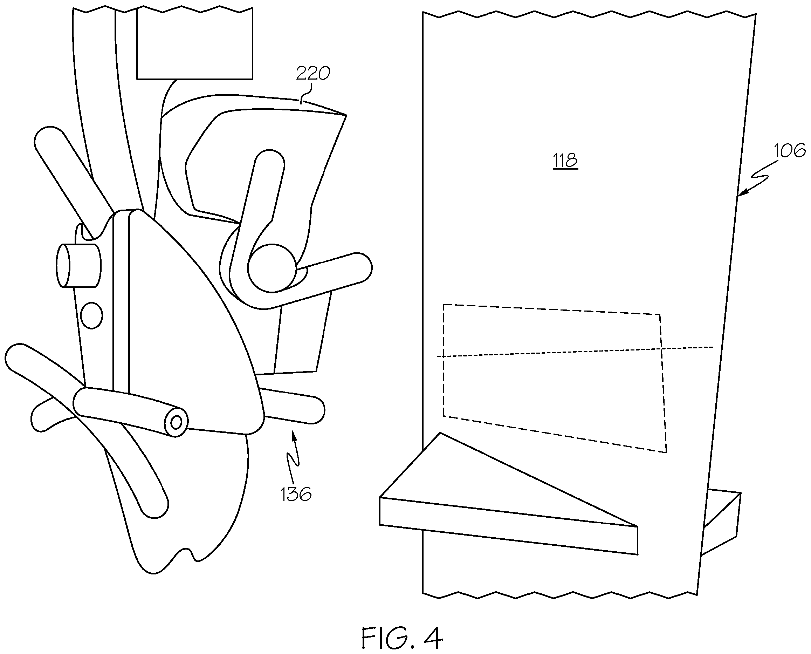

Fig. 4 illustrates an example of a portion of the component 106 and an example of a measurement system 136. The component 106 includes the surface 118. The component 106 can also include a second surface, which is opposite the surface 118. Any of the surfaces of the component 106 can be sanded or otherwise finished using the system 100 and/or according to the method 1000. The measurement system 136 collects or generates the measurement data 138 (e.g., data points) representing the surface 118.

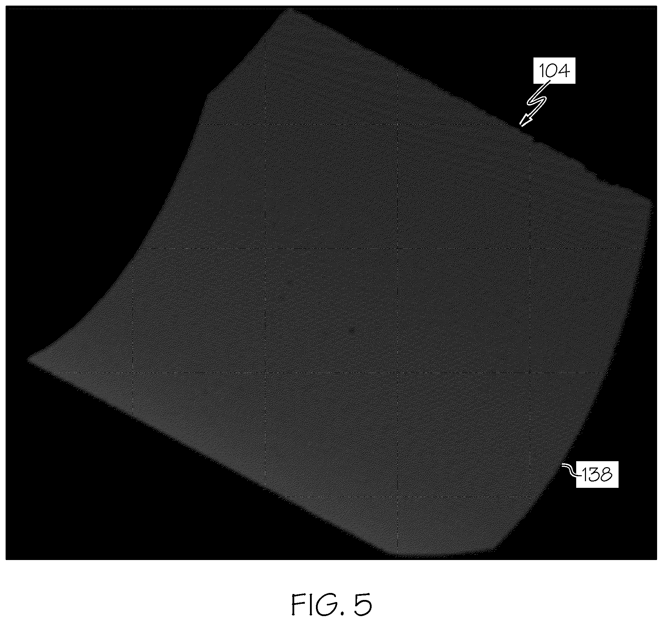

Fig. 5 illustrates an example of the model 104. The model 104 is generated using the measurement data 138 collected or generated by the measurement system 136. In one or more examples, the model 104 is a point cloud or similar collection of data points in 3D space that represent the 3D shape of at least a portion of the surface 118 and/or the component 106.

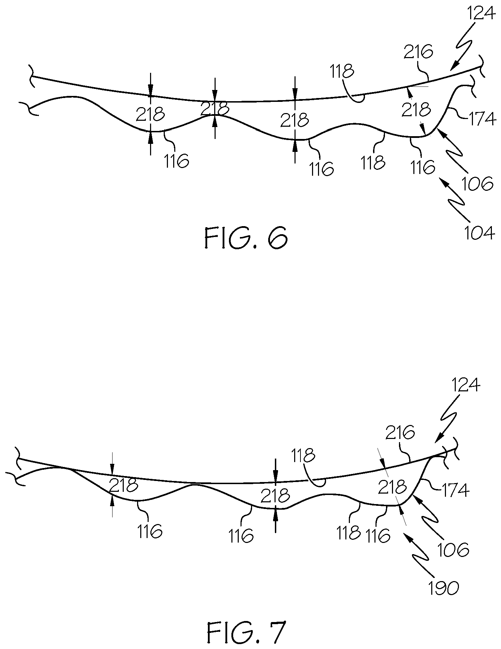

Fig. 6 illustrates an example of a conventional analysis process to estimate the dimensions 218 of the bumps 116 forming the waviness 184 of the surface 118. In some examples including this example, the first shape 174 of the surface 118, as represented by the model 104, is referenced or compared to an ideal shape 216 of the surface 118. In this example, the model 104 represents the component 106 and the surface 118 in the first shape 174, which, for example, includes deformation 162 and waviness 184 (Fig. 1). In some examples, the component 106 is flexible and experiences some degree of deformation 162 (e.g., global variations in form 198) and the surface 118 includes some degree of waviness 184 (e.g., local variations in the surface profile), which are represented by the model 104.

In the above example of a conventional analysis process, the dimensions 218 (e.g., first dimensions 114) of the bumps 116 forming the waviness 184 of the surface 118 are estimated or calculated by the linear distances between the surface 118 represented by the model 104 and the ideal shape 216 of the surface 118. However, it can be appreciated that the dimensions of the bumps 116 forming the waviness 184 of the surface 118 may be obscured or difficult to accurately determine due to the deformation 162 (e.g., global variations in the form 198) in the shape 146 of the component 106. Therefore, it is desirable to estimate the dimensions 218 of the waviness 184 without deformation 162 in the shape 146 of the component 106. The system 100 advantageously facilitates removal of deformation 162 from the calculation of the dimensions 218 of the bumps 116 on the surface 118.

Fig. 7 illustrates an example of an analysis process to estimate the dimensions 218 of the bumps 116 forming the waviness 184 of the surface 118 used by the system 100 and/or according to the method 1000. In some examples, including this example, deformation 162 (e.g., global variations in the form 198) in the shape 146 of the component 106 is removed from the analysis process such that only waviness 184 in the shape 146 of the surface 118 (e.g., local variations in the surface profile) are accounted for when determining the dimensions 218 of the bumps 116.

As will be described in more detail below, in one or more examples, the model 104 is replaced by a modified model 190 representing the component 106. The modified model 190 represents the component 106, such as at least a portion of the surface 118. The modified model 190 represents the component 106 and, thus, the surface 118 as manufactured but with deformation 162 removed. In other words, the modified model 190 represents the component 106 and/or the surface 118 that does not include deformation 162 but does include waviness 184 in the shape 146.

In one or more examples, the bumps 116 that form the waviness 184 of the surface 118 are represented by a space between representations of the surface 118 of the modified model 190 and the ideal shape 216. The dimensions 218 of the bumps 116 are thereby estimated or calculated by the linear distances between the surface 118 represented by the modified model 190 and the ideal shape 216.

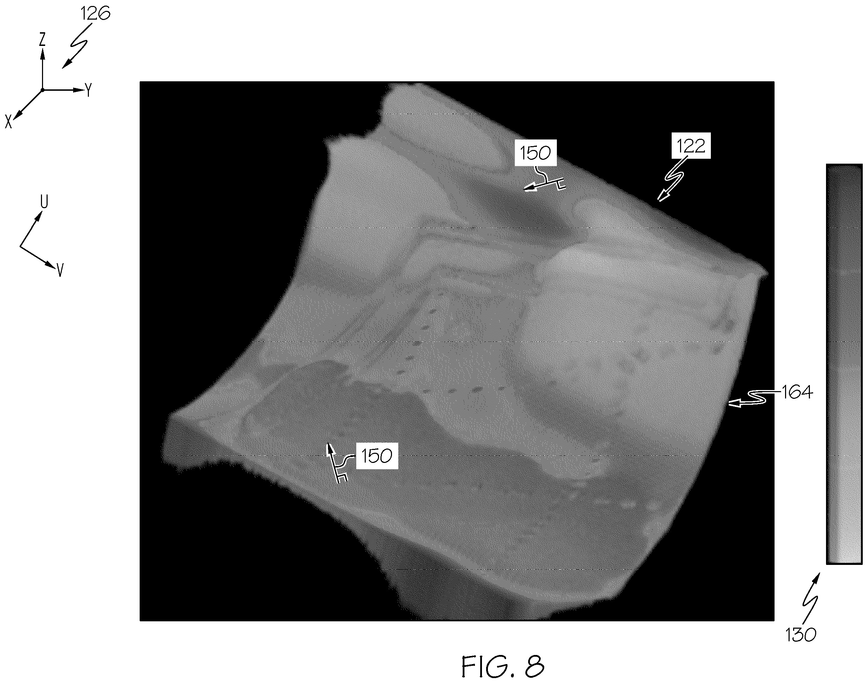

Referring again to Fig. 2, in one or more examples, the model analyzer 112 determines (e.g., is configured or adapted to determine) an overall deviation 122 in a normal direction 150 (Fig. 8) between the model 104 of the component 106 and a nominal model 124 of the component 106. In one or more examples, the model analyzer 112 performs (e.g., is configured or adapted to perform) a best fit alignment, also referred to as a best fit analysis 186, between the model 104 and the nominal model 124 of the component 106 to determine the overall deviation 122. In one or more examples, the model analyzer 112 determines (e.g., is configured or adapted to determine) overall dimensions 164 of the overall deviation 122 in the normal direction 150.

For the purpose of the present disclosure, the nominal model 124 generally refers to or represents the ideal shape 216 of the component 106 and/or the surface 118. In one or more examples, the nominal model 124 is or takes the form of a computer-aided design (CAD) model of the component 106 that represents a nominal or design geometry of the component 106 and, thus, the surface 118. In one or more examples, the nominal model 124 is or takes the form of a mathematical or geometric model based on one or more two-dimensional curvatures or three-dimensional shapes representing one or more portions of the surface 118. It can be appreciated that the shape 146 of the component 106 represented in the nominal model 124 does not include deformation 162 (global variations in form 198) or waviness 184 (local variations in surface profile).

Fig. 8 illustrates an example of the overall deviation 122 in the normal direction 150 between the model 104 and the nominal model 124 of the component 106. Performing the best fit analysis 186 (Fig. 2), such as a least squares alignment, of the surface 118 represented in the model 104 and the surface 118 represented in the nominal model 124 provides the overall deviation 122 in the normal direction 150 between the model 104 and the nominal model 124. The overall dimensions 164 are represented by or are calculated as values 130 (e.g., linear distance measurement values in the normal direction 150) relative to an XYZ-coordinate system 126.

Referring again to Fig. 2, in one or more examples, the system 100, such as the computer 148 executing the instructions 170, includes a user interface (UI) 202. A graphical illustration of the overall deviation 122 and the overall dimensions 164 of the overall deviation 122, for example, as depicted in Fig. 8, is an example of a graphical representation displayed to a user by the UI 202.

In one or more examples, the overall deviation 122 includes both large-scale (e.g., gross or global) shape differences and small-scale surface variations. The large-scale shape variations represent the form 198 and are referred to herein as form deviations 132. The small-scale surface variations represent the waviness 184 and are referred to herein as waviness deviations 134. Examples of the system 100 and the method 1000 advantageously enables the dimensions 218 of the bumps 116 forming the waviness 184 of the surface 118 and, thus, the sanding plan 208 to be determined based on only the small-scale variations (the waviness 184).

In one or more examples, the model analyzer 112 maps (e.g., is configured or adapted to map) the overall deviation 122 from the XYZ-coordinate system 126 to a UVW-coordinate system 128 such that the values 130 for the overall dimensions 164 of the overall deviation 122 are represented along a W-axis 152 of the UVW-coordinate system 128. In one or more examples, coordinate mapping 192 includes any suitable conformal mapping or charting techniques.

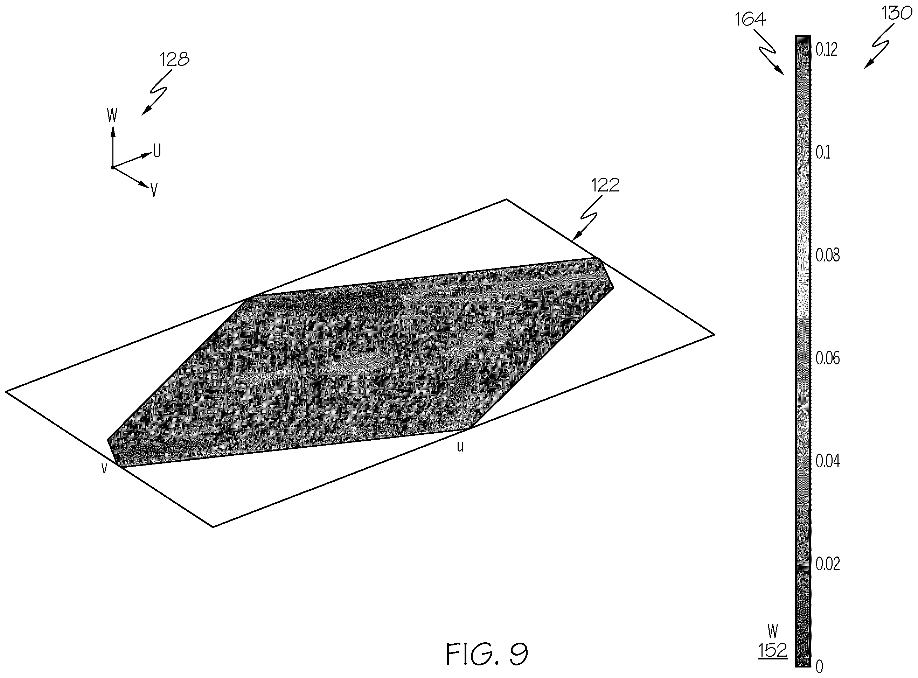

Fig. 9 illustrates an example of the overall deviation 122 as mapped from the XYZ-coordinate system 126 (Fig. 8) to the UVW-coordinate system 128. In one or more examples, the data representing the overall deviation 122 is changed (e.g., charted or mapped) from x, y, z-coordinate points to u, v, w-coordinate points. A two-dimensional (2D) coordinate system is used so that u, v-coordinates represent location on the component 106 and w-coordinates represent the deviations from the nominal (e.g., ideal) geometry. This operation effectively removes the designed or ideal shape from the component 106 so that the W-axis 152 is only deviation from the design or ideal geometry.

In one or more examples, the graphical illustration of the overall deviation 122 and the overall dimensions 164 of the overall deviation 122 depicted in Fig. 9 is an example of a graphical representation displayed to a user by the UI 202.

Referring again to Fig. 2, in one or more examples, the model analyzer 112 filters (e.g., is configured or adapted to filter) the values 130 for the overall dimensions 164 of the overall deviation 122 into the form deviation 132 and the waviness deviation 134. In one or more examples, the system 100, such as the computer 148 executing the instructions 170, includes a filter 154 that performs the filtering process. In one or more examples, the model analyzer 112 filters the values 130 using a low-pass filter 156. In one or more examples, the model analyzer 112 filters the values 130 using a robust Gaussian regression filter 158. In one or more examples, the filter 154, such as the low-pass filter 156 or the robust Gaussian regression filter 158, is run over the (u, v, w-point cloud to filter the data into form 198 and waviness 184. Because the designed curvature has effectively been removed, a first order regression function (e.g., planar regression) is selected and used for the local fitting.

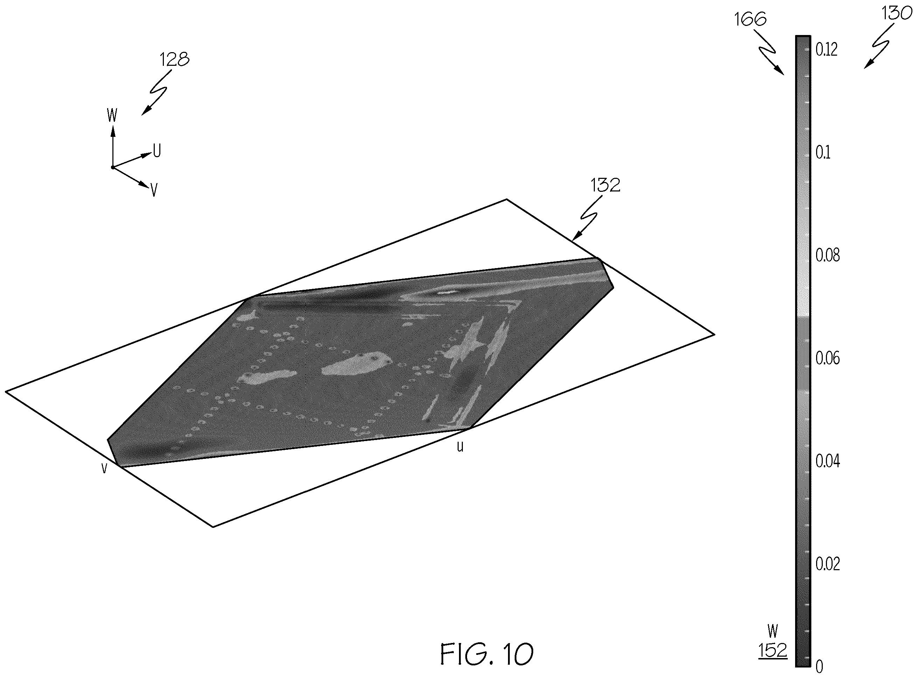

Fig. 10 illustrates an example of the form deviation 132 and the values 130 of the form dimensions 166 as mapped to the UVW-coordinate system 128 and as filtered from the overall dimensions 164 of the overall deviation 122. In some examples, including this example, the values 130 of the form dimensions 166 of the form deviation 132 (Fig. 10) are equal or approximately equal to the values 130 of the overall dimensions 164 of the overall deviation 122 (Fig. 9). This is because the global variations in the form 198 (form deviation 132) due to the deformation 162 represent the majority of the overall deviation 122 from the design geometry.

In one or more examples, the graphical illustration of the form deviation 132 and the form dimensions 166 of the form deviation 132 depicted in Fig. 10 is an example of a graphical representation displayed to a user by the UI 202.

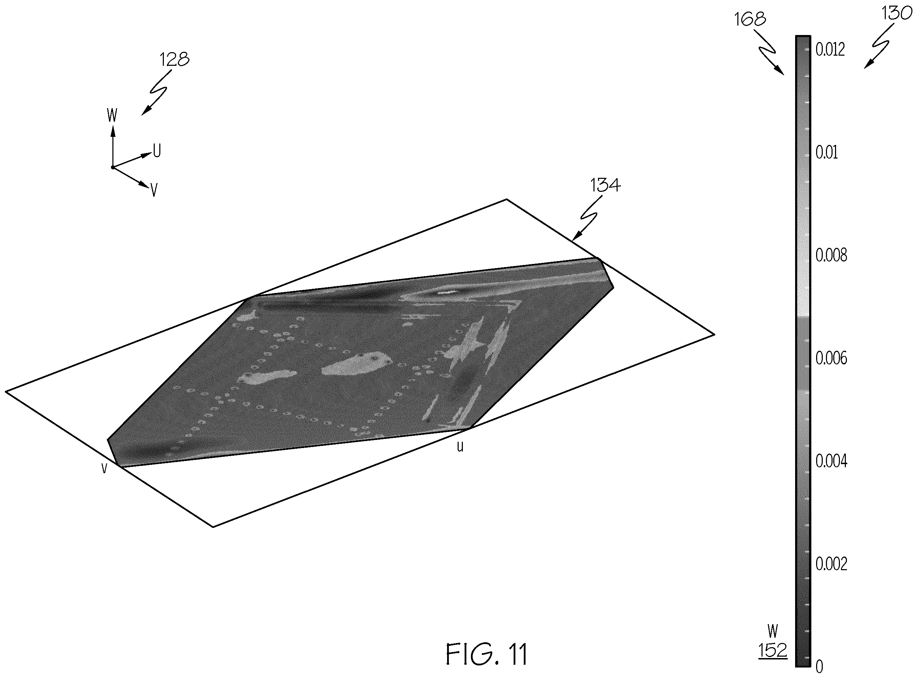

Fig. 11 illustrates an example of the waviness deviation 134 and the values 130 of the waviness dimensions 168 as mapped to the UVW-coordinate system 128 and as filtered from the overall dimensions 164 of the overall deviation 122. In some examples, including this example, the values 130 of the waviness dimensions 168 of the waviness deviation 134 (Fig. 11) are orders of magnitude less than the values 130 of the overall dimensions 164 of the overall deviation 122 (Fig. 9). This is because the local variations in the waviness 184 (waviness deviation 134) due to small-scale variations in the surface profile of the mating surface 118 represent a small portion of the overall deviation 122 from the design geometry.

In one or more examples, the graphical illustration of the form deviation 132 and the form dimensions 166 of the form deviation 132 depicted in Fig. 11 is an example of a graphical representation displayed to a user by the UI 202.

Referring again to Fig. 2, in one or more examples, the model analyzer 112 modifies (e.g., is configured or adapted to modify) the nominal model 124 by the waviness deviation 134. The nominal model 124, as modified by the waviness deviation 134, represents the surface 118 of the component 106. The nominal model 124 as modified by the waviness deviation 134 is also referred to herein as the modified model 190.

In one or more examples, the model analyzer 112 maps (e.g., is configured or adapted to map) the waviness deviation 134 from the UVW-coordinate system 128 to the XYZ-coordinate system 126 such that values 130 for waviness dimensions 168 of the waviness deviation 134 are represented as distances 160 relative to the nominal model 124.

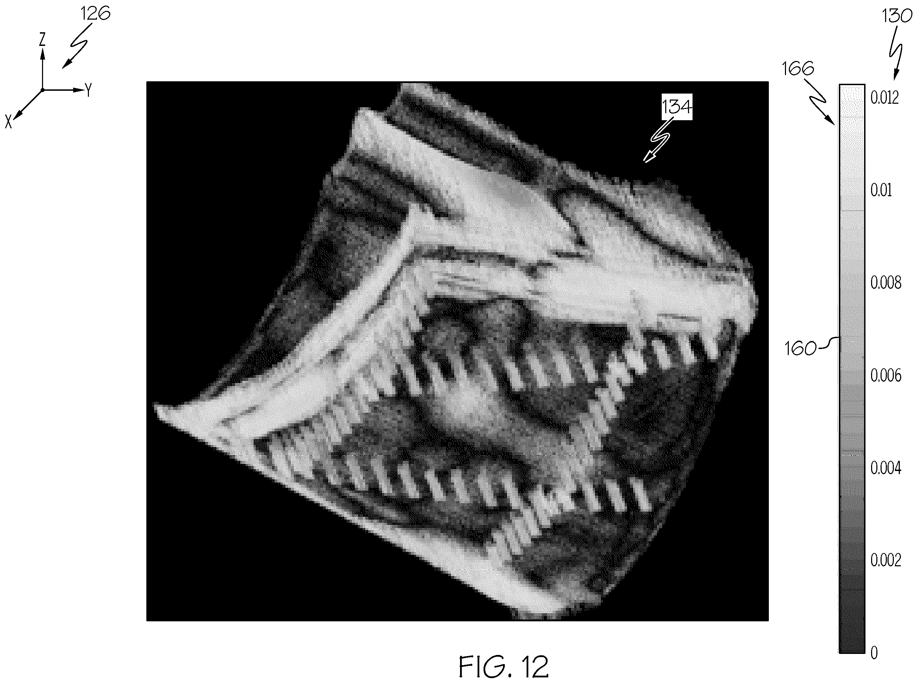

Fig. 12 illustrates an example of the waviness deviation 134 as mapped from the UVW-coordinate system 128 (Fig. 11) back to the XYZ-coordinate system 126. The values 130 of the waviness dimensions 168 are represented as distances 160 in the normal direction 150 relative to the nominal model 124.

In one or more examples, the data representing the waviness deviation 134 is changed (e.g., charted or mapped) from u, v, w-coordinate points back to x, y, z-coordinate points. The calculated waviness 184 in the w-coordinate is used as the distance 160 to add to the nominal model 124 or to subtract from the nominal model 124 to estimate the dimensions 218 of the bumps 116 that form the waviness 184 of the surface 118.

In one or more examples, the graphical illustration of the waviness deviation 134 and the waviness dimensions 168 as the distances 160 depicted in Fig. 12 is an example of a graphical representation displayed to a user by the UI 202.

Referring again to Fig. 2, in one or more examples, the path planner 212 generates (e.g., is configured or adapted to generate) the sanding plan 208. In one or more examples, the sanding plan 208 is generated based on the distance 160 used to determine the dimensions 218 of the bumps 116 that form the waviness 184 of the surface 118 and as mapped to the to the XYZ-coordinate system 126. The sanding plan 208 is used by the robotic sander 204 to automatically perform the sanding process 210.

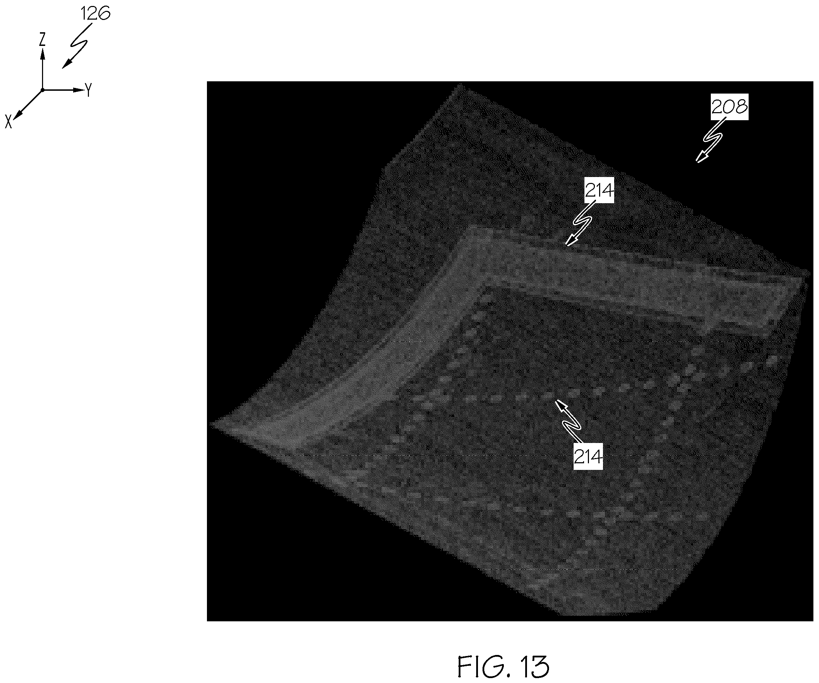

Fig. 13 illustrates an example of the sanding plan 208. In one or more examples, the sanding plan 208 is derived after an initial robot location is collected in reference to the component 106. The component 106 is scanned to determine the location of the surface 118 and the sanding plan 208 is calculated. The sanding plan 208 is delivered back to the robot controller (e.g., controller 206) in the same coordinate frame as the surface locating scan data that was measured. Because the component 106 has been located and scanned prior to this calculation, the local volume is known. The output of the calculation for the waviness 184 (e.g., waviness deviation 134) is in x, y, z-coordinates (e.g., measured point cloud) and the i, j, k-magnitude of the waviness 184 (e.g., waviness dimensions 168) relative to the known acceptable smoothness requirement for the surface 118. Once a vector (e.g., i, j, k-magnitude of the waviness 184) is calculated, a vector end point is made and a single new point cloud is prepared (e.g., the sanding plan 208 shown in Fig. 13).

In one or more examples, starting point coordinates (e.g., x1, y1, z1) are identified and the vector components (e.g., x2, y2, z2) are identified. The vector components are added to the starting point coordinates to get end point coordinates: (e.g., x_end = x1 + x2; y_end = y1 + y2; and z_end = z1 + z2. The resulting end point coordinates (e.g., x_end, y_end, z_end) represent an end point of the 3D vector. This new waviness point cloud x, y, z is fed to the controller 206 with the initial point cloud and the sanding path 214 is calculated using the end point cloud as the 'top' of the sanding.

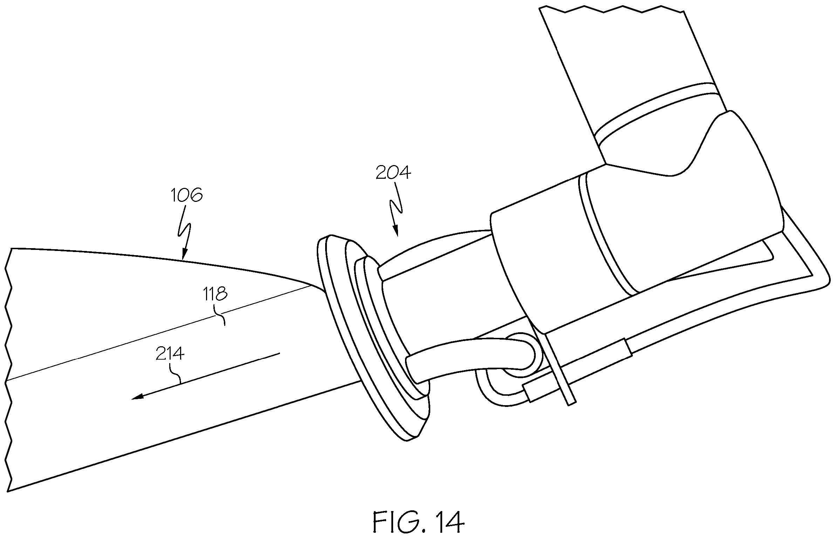

Fig. 14 illustrates an example of the robotic sander 204 performing the sanding process 210 (Fig. 1) to remove the waviness 184 from the surface 118 of the component 106. The robotic sander 204 moves along the sanding path 214 according to the sanding plan 208. In one or more examples, the system 100 includes the controller 206 (Fig. 1). The sanding plan 208 is provided to the controller 206. The controller 206 selectively controls and instructs (e.g., is configured to selectively control and instruct) movement of the robotic sander 204 during the sanding process 210.

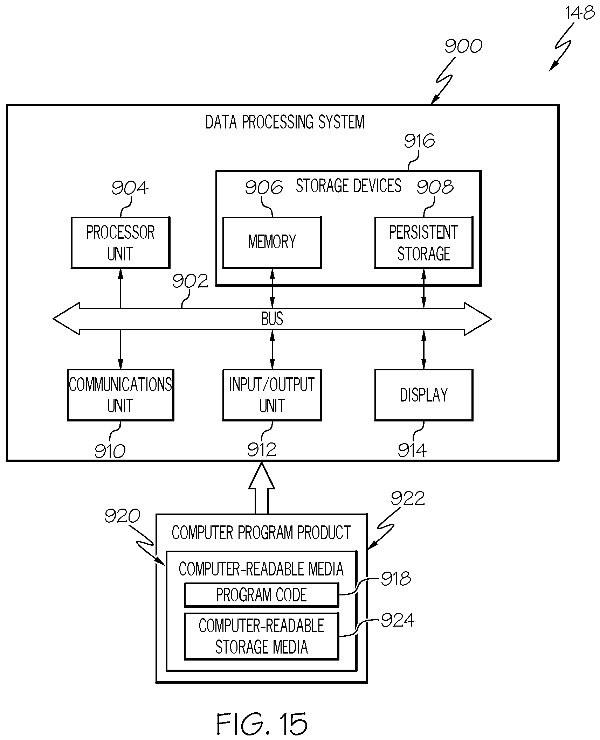

Referring to Figs. 2 and 15, in one or more examples, the model generator 102, the model analyzer 112, and/or the path planner 212 take the form of program code 918 that is executed by a data processing system 900 (Fig. 15).

Referring now to Figs. 2 and 4, in one or more examples, the system 100 includes the measurement system 136. The measurement system 136 collects or generates the measurement data 138. The measurement data 138 represents at least a portion of the surface 118 of the component 106. The measurement data 138 is generated before the component 106 undergoes the sanding process 210 (Fig. 1).

In one or more examples, the measurement system 136 generates the second measurements data 140. The second measurement data 140 represents at least a portion of the surface 118 of the component 106. The second measurement data 140 is generated after the component 106 undergoes the sanding process 210 (Fig. 1). The second measurement data 140 is used to confirm the adequacy of the sanding process 210. The process described herein above and illustrated in Figs. 14 can be iteratively repeated until the surface 118 is adequately finished.

In one or more examples, the measurement system 136 includes or takes the form of a scanner 220 or other suitable scanning device, which is used to scan at least a portion of the component 106, such as at least a portion of the surface 118, and to collect or generate the measurement data 138. In one or more examples, the scanner 220 includes or takes the form of, for example, a laser system, an optical measurement device, or some other type of scanning or metrology system. The laser system may be, for example, a laser radar scanner. The optical measurement device may be, for example, a three-dimensional optical measurement device. In another example, measurement system 136 takes the form of a photogrammetry system.

Referring now to Figs. 1 and 2, in one or more examples, the measurement data 138 includes data points or 3D shape information about the shape 146, for example, the first shape 174 of the component 106 and/or the surface 118 before the sanding process 210. In one or more examples, the second measurement data 140 includes data points or 3D shape information about the shape 146, for example, the second shape 176 of the component 106 and/or the surface 118 after the sanding process 210.

In one or more examples, the measurement data 138 (and the second measurement data 140 and any subsequent measurement data) take the form of three-dimensional point clouds. As an example, the measurement data 138 takes the form of a three-dimensional point cloud that has sufficient density to capture the shape 146 of the component 106 and, thus, the surface 118 with a desired level of accuracy.

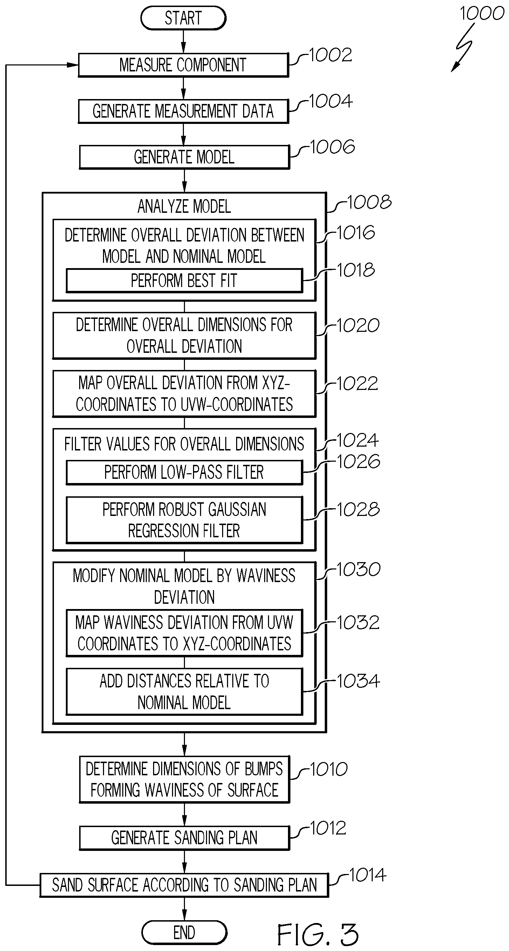

Referring now to Fig. 3, the following are examples of the method 1000. In one or more examples, the method 1000 is implemented using the system 100 (Fig. 2). The method 1000 includes a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

Referring to Figs. 2 and 15, in one or more examples, the method 1000 is implemented using the computer 148 (Fig. 2). As an example, one or more operations or steps of the method 1000 are performed using data processing system 900 (Fig. 15) and, as such, in these examples, the method 1000 is a computer-implemented method or process.

Fig. 3 illustrates an example of the method 1000. In one or more examples, the method 1000 includes a step of measuring 1002 (e.g., scanning) the component 106. At least a portion of the component 106, such as at least a portion of the surface 118, is measured. In one or more examples, the measuring 1002 is performed using the measurement system 136 (Fig. 2).

In one or more examples, the method 1000 includes a step of generating 1004 the measurement data 138. The measurement data 138 represents at least a portion of the component 106, such as at least a portion of the surface 118. In one or more examples, the measurement data 138 is generated or collected using the measurement system 136 and is a result of the measuring 1002.

In one or more examples, the method 1000 includes a step of generating 1006 the model 104. The model 104 represents at least a portion of the component 106, such as at least a portion of the surface 118. In one or more examples, the model 104 is generated using the measurement data 138.

In one or more examples, the method 1000 includes a step of analyzing 1008 the model 104. In one or more examples, the model 104 is processed and analyzed to determine the dimensions 218 of the bumps 116 forming the waviness 184 of the surface 118 of the component 106. In these examples, the method 1000 includes a step of determining 1010 the dimension 218 of the bumps 116 forming the waviness 184 of the surface 118 of the component 106 based on the analysis performed on the model 104.

In one or more examples, the method 1000 includes a step of generating 1012 the sanding plan 208. The sanding plan 208 includes the sanding path 214 used by the robotic sander 204 to automatically perform the sanding process 210.

In one or more examples, the method 1000 includes a step of sanding 1014 (or otherwise finishing) the surface 118 using the robotic sander 204. In these examples, the robotic sander 204 moves along the sanding path 214 according to the sanding plan 208.

In one or more examples, the method 1000, such as the step of analyzing 1008, includes a step of determining 1016 (e.g., calculating) the overall deviation 122 in the normal direction 150 between the model 104 and the nominal model 124 of the component 106.

In one or more examples of the method 1000, the step of determining 1016 includes a step of performing 1018 a best fit alignment between the model 104 and the nominal model 124 of the component 106 to determine the overall deviation 122.

In one or more examples, the method 1000, such as the step of analyzing 1008, includes a step of determining (e.g., calculating) 1020 the overall dimensions 164 of the overall deviation 122 in the normal direction 150.

In one or more examples, the method 1000, such as the step of analyzing 1008, includes a step of mapping 1022 the overall deviation 122 from the XYZ-coordinate system 126 to the UVW-coordinate system 128 such that values 130 for the overall dimensions 164 of the overall deviation 122 are represented along the W-axis 152.

In one or more examples, the method 1000, such as the step of analyzing 1008, includes a step of filtering 1024 the values 130 for the overall dimensions 164 of the overall deviation 122 into the form deviation 132 and the waviness deviation 134.

In one or more examples, according to the method 1000, the values 130 for the overall dimensions 164 of the overall deviation 122 are filtered into the form deviation 132 and the waviness deviation 134 using the low-pass filter 156. In these examples, the step of filtering 1024 includes a step of performing 1026 (e.g., executing) the low-pass filter 156.

In one or more examples, according to the method 1000, the values 130 for the overall dimensions 164 of the overall deviation 122 are filtered into the form deviation 132 and the waviness deviation 134 using the robust Gaussian regression filter 158. In these examples, the step of filtering 1024 includes a step of performing 1028 (e.g., executing) the robust Gaussian regression filter 158.

In one or more examples, the method 1000, such as the step of analyzing 1008, includes a step of modifying 1030 the nominal model 124 by the waviness deviation 134 such that the nominal model 124, as modified by the waviness deviation 134, represents the surface 118 of the component 106.

In one or more examples, according to the method 1000, the step of modifying 1030 includes a step of mapping 1032 the waviness deviation 134 from the UVW-coordinate system 128 to the XYZ-coordinate system 126 such that values 130 for waviness dimensions 168 of the waviness deviation 134 are represented as distances 160 relative to the nominal model 124.

In one or more examples, according to the method 1000, the step of modifying 1030 includes a step of adding 1034 the distances 160 to the nominal model 124 such that the modified model 190 represents the component 106, thereby providing the dimensions 218 of the bumps 116 forming the waviness 184 of the surface 118.

Referring to Fig. 15, by way of examples, the present disclosure is also directed to the computer program product 922. The computer program product 922 includes a non-transitory computer-readable medium 920 including program code 918 that, when executed by one or more processors 904, causes the one or more processors 904 to perform operations.

In one or more examples, the operations represent one or more of the steps of the method 1000 disclosed herein above and illustrated in Fig. 3. In one or more examples, the operations include generating the model 104 of the component 106 from the measurement data 138. In one or more examples, the operations include filtering out the deformation 162 to determine the waviness 184. In one or more examples, the operations include analyzing the model 104 to determine dimensions 218 of the bumps 116 that form the waviness 184 of the surface 118 of the component 106. In one or more examples, the operations include determining the overall deviation 122 in the normal direction 150 between the model 104 and the nominal model 124 of the component 106. In one or more examples, the operations include performing the best fit alignment between the model 104 and the nominal model 124 of the component 106 to determine the overall deviation 122. In one or more examples, the operations include determining the overall dimensions 164 of the overall deviation 122 in the normal direction 150. In one or more examples, the operations include mapping the overall deviation 122 from the XYZ-coordinate system 126 to the UVW-coordinate system 128 such that values 130 for the overall dimensions 164 of the overall deviation 122 are represented along the W-axis 152. In one or more examples, the operations include filtering the values 130 for the overall dimensions 164 of the overall deviation 122 into the form deviation 132 and the waviness deviation 134. In one or more examples, the filtering is performed using the low-pass filter 156. In one or more examples, the filtering is performed using the robust Gaussian regression filter 158. In one or more examples, the operations include modifying the nominal model 124 by the waviness deviation 134 such that the nominal model 124 as modified by the waviness deviation 134 represents the surface 118 of the component 106. In one or more examples, the operations include mapping the waviness deviation 134 from the UVW-coordinate system 128 to the XYZ-coordinate system 126 such that values 130 for the waviness dimensions 168 of the waviness deviation 134 are represented as distances 160 relative to the nominal model 124. In one or more examples, the operations include generating the sanding plan 208 for use by the robotic sander 204 to remove the bumps 116 from the surface 118. The sanding plan 208 is generated based on the waviness dimensions 168 of the waviness deviation 134 as represented by distances 160 relative to normal and coordinate location of the XYZ-coordinate system 126.

Referring again to Fig. 2, in one or more examples, the system 100 may be implemented using software, hardware, firmware, or a combination thereof. When software is used, the operations performed by the system 100 may be implemented using, for example, without limitation, program code configured to run on a processor unit. When firmware is used, the operations performed by the system 100 may be implemented using, for example, without limitation, program code and data and stored in persistent memory to run on a processor unit.

When hardware is employed, the hardware may include one or more circuits that operate to perform the operations performed by the system 100. Depending on the implementation, the hardware may take the form of a circuit system, an integrated circuit, an application specific integrated circuit (ASIC), a programmable logic device, or some other suitable type of hardware device configured to perform any number of operations.

A programmable logic device may be configured to perform certain operations. The device may be permanently configured to perform these operations or may be reconfigurable. A programmable logic device may take the form of, for example, without limitation, a programmable logic array, a programmable array logic, a field programmable logic array, a field programmable gate array, or some other type of programmable hardware device.

In some examples, the operations and processes performed by the system 100 may be performed using organic components integrated with inorganic components. In some cases, the operations and processes may be performed by entirely organic components, excluding a human being. For example, circuits in organic semiconductors may be used to perform these operations and processes.

Referring to Fig. 15, in one or more examples, the computer 148 (Fig. 2) includes or takes the form of the data processing system 900. In one or more examples, the data processing system 900 includes a communications framework 902, which provides communications between at least one processor 904, one or more storage devices 916, such as memory 906 and/or persistent storage 908, a communications unit 910, an input/output unit 912 (I/O unit), and a display 914. In this example, the communications framework 902 takes the form of a bus system.

The processor 904 serves to execute the instructions 170 (Fig. 2) for software that can be loaded into the memory 906. In one or more examples, the processor 904 is a number of processor units, a multi-processor core, or some other type of processor, depending on the particular implementation.

The memory 906 and the persistent storage 908 are examples of the storage devices 916. A storage device is any piece of hardware that is capable of storing information, such as, for example, without limitation, at least one of data, program code in functional form, or other suitable information either on a temporary basis, a permanent basis, or both on a temporary basis and a permanent basis. The storage devices 916 may also be referred to as computer readable storage devices in one or more examples. The memory 906 is, for example, a random-access memory or any other suitable volatile or non-volatile storage device. The persistent storage 908 can take various forms, depending on the particular implementation.

For example, the persistent storage 908 contains one or more components or devices. For example, the persistent storage 908 is a hard drive, a solid-state hard drive, a flash memory, a rewritable optical disk, a rewritable magnetic tape, or some combination of the above. The media used by the persistent storage 908 also can be removable. For example, a removable hard drive can be used for the persistent storage 908.

The communications unit 910 provides for communications with other systems or devices, such as the measurement system 136 or other computer systems. In one or more examples, the communications unit 910 is a network interface card.

Input/output unit 912 allows for input and output of data with other devices that can be connected to the data processing system 900. As an example, the input/output unit 912 provides a connection for user input through at least one of a keyboard, a mouse, or some other suitable input device. Further, the input/output unit 912 can send output to a printer. The display 914 provides a mechanism to display information to a user. For example, the user interface 202 is displayed to a user by the display 914.

Instructions (e.g., instructions 170) for at least one of the operating system, applications, or programs can be located in the storage devices 916, which are in communication with the processor 904 through the communications framework 902. The processes of the various examples and operations described herein can be performed by the processor 904 using computer-implemented instructions, which can be located in a memory, such as the memory 906.

The instructions 170 are referred to as program code, computer usable program code, or computer readable program code that can be read and executed by a processor of the processor 904. The program code in the different examples can be embodied on different physical or computer readable storage media, such as the memory 906 or the persistent storage 908.

In one or more examples, the program code 918 is located in a functional form on computer readable media 920 that is selectively removable and can be loaded onto or transferred to the data processing system 900 for execution by the processor 904. In one or more examples, the program code 918 and computer readable media 920 form the computer program product 922. In one or more examples, the computer readable media 920 is computer readable storage media 924.

In one or more examples, the computer readable storage media 924 is a physical or tangible storage device used to store the program code 918 rather than a medium that propagates or transmits the program code 918.

Alternatively, the program code 918 can be transferred to the data processing system 900 using a computer readable signal media. The computer readable signal media can be, for example, a propagated data signal containing the program code 918. For example, the computer readable signal media can be at least one of an electromagnetic signal, an optical signal, or any other suitable type of signal. These signals can be transmitted over at least one of communications links, such as wireless communications links, optical fiber cable, coaxial cable, a wire, or any other suitable type of communications link.

The different components illustrated for data processing system 900 are not meant to provide architectural limitations to the manner in which different examples can be implemented. The different examples can be implemented in a data processing system including components in addition to or in place of those illustrated for the data processing system 900. Other components shown in Fig. 21 can be varied from the examples shown. The different examples can be implemented using any hardware device or system capable of running the program code 918.

Additionally, various components of the computer 148 and/or the data processing system 900 may be described as modules. For the purpose of the present disclosure, the term "module" includes hardware, software or a combination of hardware and software. As an example, a module can include one or more circuits configured to perform or execute the described functions or operations of the executed processes described herein (e.g., the method 1000). As another example, a module includes a processor, a storage device (e.g., a memory), and computer-readable storage medium having instructions that, when executed by the processor causes the processor to perform or execute the described functions and operations. In one or more examples, a module takes the form of the program code 918 and the computer readable media 920 together forming the computer program product 922. In one or more examples, the model generator 102 and the model analyzer 112 are implemented as modules.

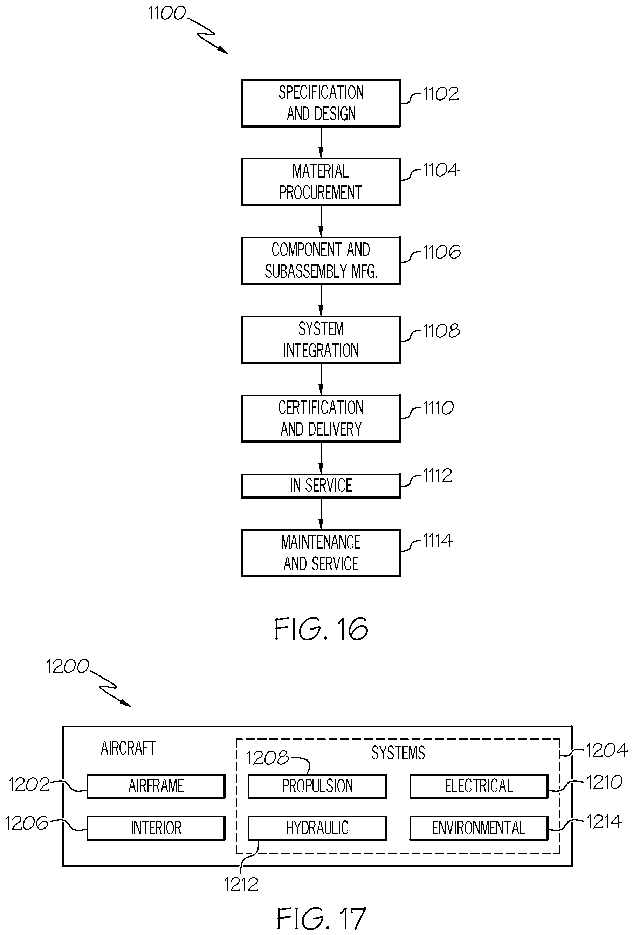

Referring now to Figs. 16 and 17, examples of the system 100, the method 1000, and/or the computer program product 922 described herein, may be related to, or used in the context of, the aerospace manufacturing and service method 1100, as shown in the flow diagram of Fig. 16 and an aircraft 1200, as schematically illustrated in Fig. 17. As an example, the aircraft 1200 and/or the manufacturing and service method 1100 may include or utilize may include the structure, such as a fuselage, wings, and the like, made using components having at least one surface that is sanded or otherwise finished using the system 100 and/or according to the method 1000.

Referring to Fig. 17, which illustrates an example of the aircraft 1200. The aircraft 1200 can be any aerospace vehicle or platform. In one or more examples, the aircraft 1200 includes the airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems, such as, but not limited to, communications systems, avionics systems, software distribution systems, network communications systems, passenger information/entertainment systems, guidance systems, radar systems, weapons systems, and the like. The aircraft 1200 can have any number of components (e.g., component 106) having a surface (e.g., surface 118) that is sanded or otherwise finished using the system 100 and/or according to the method 1000.

Referring to Fig. 16, during pre-production of the aircraft 1200, the manufacturing and service method 1100 includes specification and design 1102 of the aircraft 1200 and material procurement 1104. During production of the aircraft 1200, component and subassembly manufacturing 1106 and system integration 1108 of the aircraft 1200 take place. Thereafter, the aircraft 1200 goes through certification and delivery 1110 to be placed in service 1112. Routine maintenance and service 1114 includes modification, reconfiguration, refurbishment, etc. of one or more systems of the aircraft 1200.

Each of the processes of the manufacturing and service method 1100 illustrated in Fig. 16 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of the system 100, the method 1000, and the computer program product 922, shown and described herein, may be employed during any one or more of the stages of the manufacturing and service method 1100 shown in the flow diagram illustrated by Fig. 16. In an example, component surfaces can be sanded using the system 100 and/or according to the method 1000 during a portion of component and subassembly manufacturing and/or system integration. Further, component surfaces can be sanded using the system 100 and/or according to the method 1000 while the aircraft 1200 is in service. Also, component surfaces can be sanded using the system 100 and/or according to the method 1000 during system integration, certification and delivery. Similarly, component surfaces can be sanded using the system 100 and/or according to the method 1000 while the aircraft 1200 is in service and during maintenance and service.

The following clauses present further examples:
Clause 1. A system (100) comprising:
   a model generator (102) configured to generate a model (104) representing at least a portion of a surface (118) of a component (106);
   a model analyzer (112) configured to analyze the model (104) to determine a waviness (184) of the surface (118); and
   a path planner (212) configured to generate a sanding plan (208).
Clause 2. The system (100) of Clause 1, further comprising a measurement system (136) configured to generate measurement data (138) representing at least the portion of the surface (118) of the component (106),
   wherein the measurement data (138) is used to generate the model (104).
Clause 3. The system (100) of Clause 1 or Clause 2, further comprising a robotic sander (204) configured to sand the surface (118) according to the sanding plan (208).
Clause 4. The system (100) of any preceding Clause, wherein the model analyzer (112) is further configured to:
   determine an overall deviation (122) in a normal direction (150) between the model (104) and a nominal model (124) of the component (106); and
   determine overall dimensions (164) of the overall deviation (122) in the normal direction (150).
Clause 5. The system (100) of Clause 4, wherein the model analyzer (112) is further configured to perform a best fit alignment between the model (104) and the nominal model (124) of the component (106) to determine the overall deviation (122).
Clause 6. The system (100) of Clause 4 or Clause 5, wherein the model analyzer (112) is further configured to:
   map the overall deviation (122) from an XYZ-coordinate system (126) to a UVW-coordinate system (128) such that values (130) for overall dimensions (164) of the overall deviation (122) are represented along a W-axis (152); and
   filter the values (130) for the overall dimensions (164) of the overall deviation (122) into a form deviation (132) and a waviness deviation (134).
Clause 7. The system (100) of Clause 6, wherein the model analyzer (112) filters the values (130) using one of a low-pass filter (156) or a robust gaussian regression filter (158).
Clause 8. The system (100) of Clause 6 or Clause 7, wherein the model analyzer (112) is configured to modify the nominal model (124) by the waviness deviation (134), such that the nominal model (124), as modified by the waviness deviation (134), represents the waviness (184) of the surface (118) of the component (106).
Clause 9. The system (100) of Clause 8, wherein the model analyzer (112) is further configured to map the waviness deviation (134) from the UVW-coordinate system (128) to the XYZ-coordinate system (126) such that values (130) for waviness dimensions (168) of the waviness deviation (134) are represented as distances (160) relative to the nominal model (124).
Clause 10. The system (100) of any preceding Clause, wherein the model generator (102), the model analyzer (112), and the path planner (212) take the form of program code (918) that is executed by a data processing system (900).
Clause 11. A method (1000), optionally a computer-implemented method, for sanding the surface (118) using the system (100) of any preceding Clause.
Clause 12. A method (1000), optionally a computer-implemented method, for sanding a surface (118) of a component (104), the method (1000) comprising:
   generating a model (104) of the component (106):
   analyzing the model (104) to determine a waviness (184) of the surface (118); and
   generating a sanding plan (208) for use by a robotic sander (204).
Clause 13. The method (1000) of Clause 12, wherein the model (104) is analyzed to determine dimensions (218) of bumps (116) on the surface (118) of the component (106).
Clause 14. The method (1000) of Clause 12 or Clause 13, further comprising:
   performing a best fit alignment between the model (104) and the nominal model (124);
   determining an overall deviation (122) in a normal direction (150) between the model (104) and a nominal model (124) of the component (106); and
   determining overall dimensions (164) of the overall deviation (122) in the normal direction (150).
Clause 15. The method (1000) of Clause 14, further comprising:
   mapping the overall deviation (122) from an XYZ-coordinate system (126) to a UVW-coordinate system (128) such that values (130) for the overall dimensions (164) of the overall deviation (122) are represented along a W-axis (152);
   filtering the values (130) for the overall dimensions (164) of the overall deviation (122) into a form deviation (132) and a waviness deviation (134);
   modifying the nominal model (124) by the waviness deviation (134) such that the nominal model (124) as modified by the waviness deviation (134) represents the waviness (184) of the surface (118) of the component (106); and
   mapping the waviness deviation (134) from the UVW-coordinate system (128) to the XYZ-coordinate system (126) such that values (130) for waviness dimensions (168) of the waviness deviation (134) are represented as distances (160) relative to the nominal model (124).
Clause 16. The method (1000) of Clause 15, wherein the sanding plan (208) is generated based on the waviness deviation (134) mapped to the XYZ-coordinate system (126).
Clause 17. The method (1000) of any of Clauses 12 - 16, wherein the method (1000) is implemented using a computer (148).
Clause 18. A component (106) comprising a surface (118) sanded according to the method (1000) of any of Clauses 12 - 17.
Clause 19. A non-transitory computer-readable medium (920) comprising program code (918) that, when executed by one or more processors (904), causes the one or more processors (904) to perform operations comprising:
   generating a model (104) of a component (106) from measurement data (138);
   analyzing the model (104) to determine dimensions (218) of waviness (184) of a surface (118) of the component (106); and
   generating a sanding plan (208) for use by a robotic sander (204) to remove the waviness (184).
Clause 20. The non-transitory computer-readable medium (920) of Claim 19, wherein the operations further comprise:
   performing a best fit alignment between the model (104) and a nominal model (124) of the component (106);
   determining an overall deviation (122) in a normal direction (150) between the model (104) and the nominal model (124);
   determining overall dimensions (164) of the overall deviation (122) in the normal direction (150);
   mapping the overall deviation (122) from an XYZ-coordinate system (126) to a UVW-coordinate system (128) such that values (130) for the overall dimensions (164) of the overall deviation (122) are represented along a W-axis (152);
   filtering the values (130) for the overall dimensions (164) of the overall deviation (122) into a form deviation (132) and a waviness deviation (134);
   modifying the nominal model (124) by the waviness deviation (134) such that the nominal model (124), as modified by the waviness deviation (134), represents the waviness (184) of the surface (118) of the component (106);
   mapping the waviness deviation (134) from the UVW-coordinate system (128) to the XYZ-coordinate system (126) such that values (130) for waviness dimensions (168) of the waviness deviation (134) are represented as distances (160) relative to the nominal model (124); and
   mapping the waviness deviation (134) to a sanding path (214) of the robotic sander (204) in the XYZ-coordinate system (126).

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one part of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1, 2, 4-5 and 17, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1, 2, 4-5 and 17, referred to above, need be included in every example and not all elements, features, and/or components described herein are necessarily depicted in each illustrative example. Accordingly, some of the elements, features, and/or components described and illustrated in Figs. 1, 2, 4-5 and 17 may be combined in various ways without the need to include other features described and illustrated in Figs. 1, 2, 4-5 and 17, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1, 2, 4-5 and 17, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1, 2, 4-5 and 17, and such elements, features, and/or components may not be discussed in detail herein with reference to each of Figs. 1, 2, 4-5 and 17. Similarly, all elements, features, and/or components may not be labeled in each of Figs. 1, 2, 4-5 and 17, but reference numerals associated therewith may be utilized herein for consistency.

In Figs. 3 and 16, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 3 and 16 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the system 100 and the method 1000 have been shown and described, modifications may occur to those skilled in the art upon reading the specification. The present application includes such modifications and is limited only by the scope of the claims.

## Claims

1. A method (1000) for sanding a surface (118) of a component (106), the method (1000) comprising:
generating (1006) a model (104) representing at least a portion of the surface (118) of the component (106):
analyzing (1008) the model (104) to determine a waviness (184) of the surface (118); and
generating (1012), based on the analyzing, a sanding plan (208) for use by a robotic sander (204).

2. The method (1000) of Claim 1 further comprising sanding (1014), by the robotic sander (204), the surface (118) of the component (104) according to the sanding plan (208).

3. The method (1000) of Claim 1 or Claim 2 further comprising, before generating the model (104):
measuring (1002) at least a portion of the surface (118) of the component (106);
generating (1004), from the measuring, measurement data (138) representing at least the portion of the surface (118) of the component (106); and
wherein generating the model (104) comprises generating the model (104) using the measurement data (138).

4. The method (1000) of any preceding Claim, further comprising, based on the analyzing, determining (1010) dimensions (218) of bumps (116) forming the waviness (184) on the surface (118) of the component (106).

5. The method (1000) of any preceding Claim, wherein the analyzing comprises:
determining (1016) an overall deviation (122) in a normal direction (150) between the model (104) and a nominal model (124) of the component (106); and
determining (1020) overall dimensions (164) of the overall deviation (122) in the normal direction (150).

6. The method (1000) of Claim 5, wherein determining the overall deviation (122) comprises performing (1018) a best fit alignment between the model (104) and the nominal model (124) of the component (106).

7. The method (1000) of Claim 5 or Claim 6, wherein the analyzing further comprises:
mapping (1022) the overall deviation (122) from an XYZ-coordinate system (126) to a UVW-coordinate system (128) such that values (130) for the overall dimensions (164) of the overall deviation (122) are represented along a W-axis (152).

8. The method (1000) of any of Claims 5 - 7, wherein the analyzing further comprises
filtering (1024) the values (130) for the overall dimensions (164) of the overall deviation (122) into a form deviation (132) and a waviness deviation (134), and optionally, wherein the values (130) are filtered using one of a low-pass filter (156) or a robust gaussian regression filter (158).

9. The method of Claim 8, wherein the analyzing further comprises:
modifying (1030) the nominal model (124) by the waviness deviation (134) such that the nominal model (124) as modified by the waviness deviation (134) represents the waviness (184) of the surface (118) of the component (106).

10. The method of Claim 9, when dependent on Claim 4, wherein the modifying comprises:
mapping (1032) the waviness deviation (134) from a UVW-coordinate system (128) to a XYZ-coordinate system (126) such that values (130) for waviness dimensions (168) of the waviness deviation (134) are represented as distances (160) relative to the nominal model (124); and optionally
adding (1034) the distances (160) to the nominal model (124) such that the nominal model (124) as modified by the waviness deviation (134) represents the component (106), thereby providing the dimensions (218) of the bumps (116) forming the waviness (184) of the surface (118).

11. The method (1000) of any of Claims 7 - 10, wherein the sanding plan (208) is generated based on the waviness deviation (134) mapped to the XYZ-coordinate system (126).

12. A non-transitory computer-readable medium (920) comprising program code (918) that, when executed by one or more processors (904), causes the one or more processors (904) to perform operations of any preceding Claim.

13. A system (100) configured to carry out the method of any of Claims 1 - 11, the system comprising:
a model generator (102) configured to generate the model (104) representing at least the portion of a surface (118) of a component (106);
a model analyzer (112) configured to analyze the model (104) to determine the waviness (184) of the surface (118); and
a path planner (212) configured to generate a sanding plan (208).

14. The system (100) of Claim 13, wherein the model generator (102), the model analyzer (112), and the path planner (212) take the form of program code (918) that is executed by a data processing system (900).

15. The system (100) of Claim 13 or Claim 14 further comprising a robotic sander (204) configured to sand the surface (118) according to the sanding plan (208).
